# EUROPEAN PATENT APPLICATION

(11) **EP 4 163 065 A1**
(43) Date of publication of application: **12.04.2023**
(21) Application number: 22199472.6
(22) Date of filing: 04.10.2022
(51) Int. Cl.: B25J 15/06

(54) **LIFT DEVICE**

(30) Priority: 08.10.2021 JP 2021165963
(71) Applicant: SMC Corporation, Tokyo 101-0021 (JP)
(72) Inventor: SAITOH, Masaru, Ibaraki, 300-2493 (JP); SAKA, Hiroaki, Ibaraki, 300-2493 (JP)
(74) Representative: Keil & Schaafhausen Patentanwälte PartGmbB

(57) **Abstract**

A lift device (10) includes a body (12) having a cylindrical shape and an elastic member (54) having an annular shape. The body includes, at an axial end thereof, a flat surface (16) configured to hold a workpiece. The elastic member is disposed on an outer periphery of the flat surface of the body, and includes an annular protruding portion (58) that protrudes beyond the flat surface of the body in an axial direction of the body. The annular protruding portion has a circular-arc-shaped cross-section. Air supplied to the body flows along the flat surface of the body and the annular protruding portion of the elastic member.

## Description

### BACKGROUND OF THE INVENTION

### FIELD OF THE INVENTION

The present invention relates to a lift device for suctioning and holding a workpiece by action of a negative pressure generated by the Bernoulli effect.

### DESCRIPTION OF THE RELATED ART

Conventionally, there has been known a non-contact type transport device that holds and transports a workpiece in a non-contact state by using the Bernoulli effect generated by flowing air at high speed.

For example, JP 2010-241603 A discloses a non-contact type suction gripping device for lifting a flat object (workpiece) such as a glass sheet. This suction gripping device is composed of a housing part and a nozzle part, and takes advantage of the Bernoulli effect. This patent document also discloses an embodiment in which a curved surface portion is formed in the housing part in order to prevent a shaking phenomenon of a thin flat object. The flow direction of injected air is changed to a direction away from the flat object by action of the curved surface portion due to the Coanda effect.

### SUMMARY OF THE INVENTION

However, in the non-contact type transport device using the Bernoulli effect, when the workpiece is lifted in a stage prior to holding the workpiece in a stable state, the workpiece may collide with the device main body, resulting in generation of collision noise. Further, a scratch due to the collision may remain on the workpiece.

The housing part of the suction gripping device of JP 2010-241603 A has a flat portion facing the workpiece, and the curved surface portion extending from an outer peripheral end of the flat portion is curved in a direction away from the workpiece. Therefore, it is difficult to hold the workpiece curved upward.

An object of the present invention is to solve the above-described problems.

A lift device according to an aspect of the present invention includes a body having a cylindrical shape and an elastic member having an annular shape. The body includes, at an axial end thereof, a flat surface configured to hold a workpiece. The elastic member is disposed on an outer periphery of the flat surface of the body, and includes an annular protruding portion that protrudes beyond the flat surface of the body in an axial direction of the body. The annular protruding portion has a circular-arc-shaped cross-section. Air supplied to the body flows along the flat surface of the body and the annular protruding portion of the elastic member.

According to the lift device of the present invention, even when the workpiece collides with the elastic body (elastic member) at the time of lifting the workpiece, the collision sound is suppressed to be small by action of the elastic force of the elastic body, and no scratch or scar is left on the workpiece. Further, since the annular protruding portion of the elastic body protrudes downward beyond the first flat surface of the body, a large negative pressure space is present on the inner peripheral side of the elastic body, and it is possible to easily suction and hold even the workpiece having a curved shape.

Further, since air flowing along the annular protruding portion of the elastic body is discharged in a direction opposite to the workpiece by the Coanda effect, there is no possibility that the air blows off the other workpieces placed close to the workpiece. Further, since the workpiece comes into contact with the elastic body only at the time of lifting and does not come into contact with the elastic body in a state of being suctioned and held, it is possible to reduce occurrence of suction scratches due to contact with the elastic body as much as possible.

The above and other objects, features, and advantages of the present invention will become more apparent from the following description when taken in conjunction with the accompanying drawings, in which a preferred embodiment of the present invention is shown by way of illustrative example.

### BRIEF DESCRIPTION OF THE DRAWINGS

FIG. 1 is a cross-sectional view of a lift device according to a first embodiment of the present invention;
FIG. 2 is a schematic view of main part of FIG. 1;
FIG. 3 is a partially exploded perspective view of the lift device of FIG. 1;
FIG. 4 is a view showing a state in which a workpiece having a predetermined shape is held by the lift device of FIG. 1;
FIG. 5 is a cross-sectional view of main part of a lift device according to a second embodiment of the present invention;
FIG. 6 is a cross-sectional view of main part of a lift device according to a third embodiment of the present invention;
FIG. 7 is a cross-sectional view of main part of the lift device of FIG. 6 when an elastic body is displaced;
FIG. 8 is a cross-sectional view of main part of a lift device according to a fourth embodiment of the present invention;
FIG. 9 is a partially exploded perspective view of the lift device of FIG. 8;
FIG. 10 is a cross-sectional view of main part of a lift device according to a fifth embodiment of the present invention;
FIG. 11 is a partially exploded perspective view of the lift device of FIG. 10;
FIG. 12 is a cross-sectional view of main part of a lift device according to a sixth embodiment of the present invention;
FIG. 13 is a partially exploded perspective view of the lift device of FIG. 12;
FIG. 14 is a cross-sectional view of main part of a lift device according to a seventh embodiment of the present invention;
FIG. 15 is a partially exploded perspective view of the lift device of FIG. 14;
FIG. 16 is a cross-sectional view of main part of a lift device according to an eighth embodiment of the present invention; and
FIG. 17 is a partially exploded perspective view of the lift device of FIG. 16.

### DESCRIPTION OF THE INVENTION

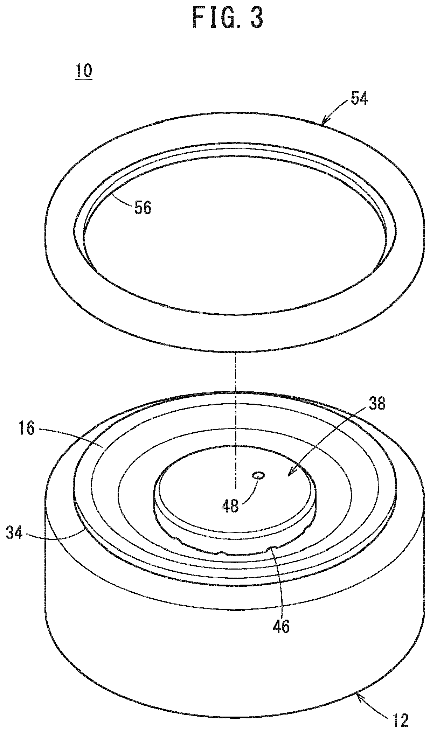

In the following description, when terms relating to up and down are used, they mean up and down directions in the drawings except for exploded perspective views (FIGS. 3, 9, 11, 13, 15, and 17).

### (First Embodiment)

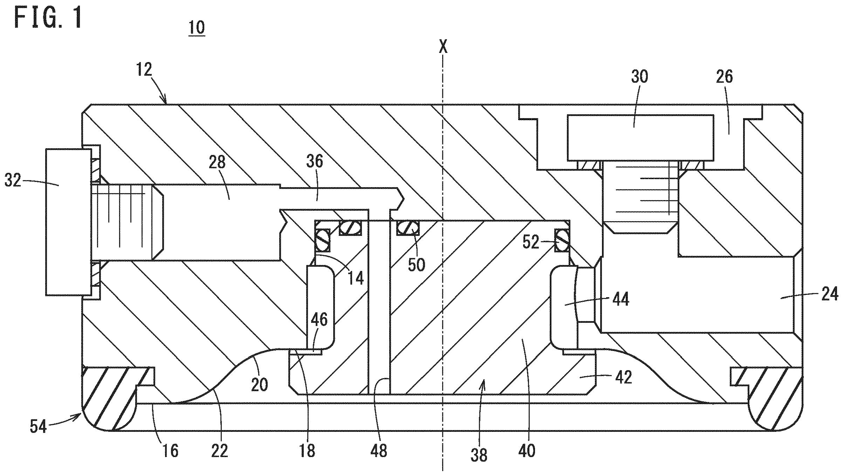

A lift device 10 according to a first embodiment of the present invention will be described with reference to FIGS. 1 to 4. The lift device 10 comprises a body 12, a deflector 38 and an elastic body (elastic member) 54.

As shown in FIG. 1, the cylindrical body 12 has an axis X extending in the up-down direction (vertical direction). The body 12 has, in the center, a hole 14 in which the deflector 38 is mounted. The hole 14 opens on the lower surface of the body 12. The axis of the hole 14 coincides with the axis X of the body 12. The lower surface of the body 12 has an annular first flat surface 16 formed in a region of the lower surface that lies near its outer periphery. The first flat surface 16 is perpendicular to the axis X of the body 12, and constitutes a workpiece holding surface that faces a workpiece with a minute gap being formed therebetween.

The opening edge of the hole 14 is connected to the first flat surface 16 via a second flat surface 18, a first curved surface 20, and a second curved surface 22. The second flat surface 18 is perpendicular to the axis X of the body 12. The first curved surface 20 is a curved surface that is concave downward (convex upward), and the second curved surface 22 is a curved surface that is convex downward (concave upward). The boundary between the first curved surface 20 and the second curved surface 22 is an inflection point in the cross-sectional shape.

The body 12 includes a first port 24, a second port 26, and a third port 28. The first port 24 and the third port 28 open on respective side surfaces of the body 12, and the second port 26 opens on an upper surface of the body 12. The first port 24 is a port for generating a negative pressure in a space that is in contact with the lower surface of the body 12. Air from an air supply source (not shown) is introduced into the body 12 through the first port 24. The first port 24 is used when air from the air supply source is to be supplied from the side surface of the body 12.

Like the first port 24, the second port 26 is a port for generating a negative pressure in the space which is in contact with the lower surface of the body 12. The second port 26 is used when air from the air supply source is to be supplied from the upper surface of the body 12. FIG. 1 shows a type of usage in which air from the air supply source is supplied from the side surface of the body 12, and the second port 26 is closed by a first plug 30.

The third port 28 is used to measure the pressure in the space below the body 12 and confirm the presence of a workpiece. The third port 28 is used to generate a positive pressure in the space below the body 12 and eliminate the negative pressure (i.e., break the vacuum). The third port 28 is located on the opposite side of the axis X of the body 12 from the first port 24. In the type of usage shown in FIG. 1, since the third port 28 is not used, the third port 28 is closed by a second plug 32. When the third port 28 is used, a pressure sensor (not shown) is attached to a pipe (tube) connected to the third port 28. Further, air from the air supply source is introduced into the body 12 through the third port 28.

The cylindrical deflector 38 includes a main body portion 40 fitted into the hole 14 of the body 12, and a flange portion 42 extending radially outward from a lower portion of the main body portion 40. The deflector 38 is fixed to the body 12 by screwing a bolt (not shown) inserted from the upper surface of the body 12 into the main body portion 40. An upper surface and a lower surface of the flange portion 42 are perpendicular to the axis X of the body 12, and the lower surface of the flange portion 42 is positioned slightly above the first flat surface 16 of the body 12.

A side surface of the main body portion 40 of the deflector 38 has an annular groove 44 that is continuous with the upper surface of the flange portion 42. The annular groove 44 of the deflector 38 communicates with the first port 24 and the second port 26 at a predetermined circumferential location. The annular groove 44 of the deflector 38 cooperates with a wall surface of the hole 14 of the body 12 to form a flow path for air supplied from the first port 24 or the second port 26.

The upper surface of the flange portion 42 is in contact with the second flat surface 18 of the body 12 and has a plurality of radially extending nozzle grooves 46. The plurality of nozzle grooves 46 communicate with the annular groove 44 and constitute a flow path of air supplied from the first port 24 or the second port 26. The total flow passage area of the plurality of nozzle grooves 46 is smaller than the flow passage area of the annular groove 44. The nozzle grooves 46 serve to increase the flow velocity of air. The air supplied from the first port 24 or the second port 26 passes through the annular groove 44 of the main body portion 40 and the nozzle grooves 46 of the flange portion 42, and is radially jetted while increasing the flow velocity. The air jetted from the nozzle groove 46 flows along the first curved surface 20, the second curved surface 22, and the first flat surface 16 of the body 12.

The deflector 38 has a vertical passage (longitudinal passage) 48 penetrating therethrough in the up-down direction, and the body 12 has a lateral passage 36. One end of the lateral passage 36 of the body 12 communicates with the third port 28, and the other end of the lateral passage 36 of the body 12 communicates with the vertical passage 48 of the deflector 38. Air supplied from the third port 28 flows downwardly from the deflector 38 through the lateral passage 36 of the body 12 and the vertical passage 48 of the deflector 38. A first seal 50 and a second seal 52 for sealing between the annular groove 44 and the vertical passage 48 are mounted on the main body portion 40 of the deflector 38.

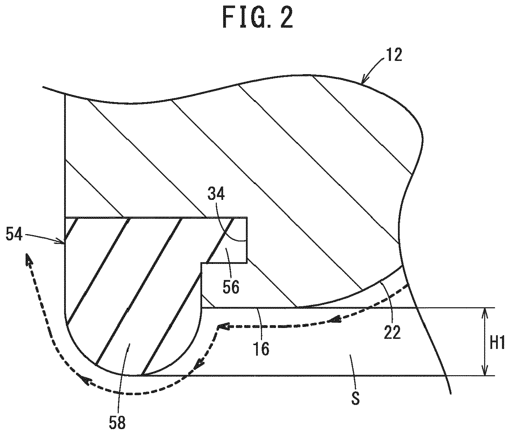

As shown in FIGS. 2 and 3, the annular elastic body 54 is disposed on the outer periphery of the first flat surface 16 of the body 12 and is attached to the outer periphery of the lower end of the body 12. The elastic body 54 is made of an elastomer such as rubber or polyurethane resin. An upper portion of the elastic body 54 is provided with an annular projection 56 that projects radially inward. The elastic body 54 is attached to the body 12 by fitting the projection 56 of the elastic body 54 into an annular attachment groove 34 provided on the outer periphery of the lower end of the body 12.

A lower portion of the elastic body 54 includes an annular protruding portion 58 protruding downward beyond the first flat surface 16 of the body 12. The annular protruding portion 58 has a semi-circular (arc-shaped) cross section, and protrudes downward by a predetermined height H1 from the first flat surface 16 of the body 12 over the entire circumference of the elastic body 54. As described above, air supplied from the first port 24 or the second port 26 is jetted radially through the annular groove 44 and the nozzle grooves 46 of the deflector 38, and flows along the first curved surface 20, the second curved surface 22, and the first flat surface 16 of the body 12. The air flowing along the first flat surface 16 further flows along the surface shape of the annular protruding portion 58 of the elastic body 54. The air flowing along the annular protruding portion 58 of the elastic body 54 is discharged upward or obliquely upward to the outside by the Coanda effect. In FIG. 2, the flow of air is indicated by dashed arrows.

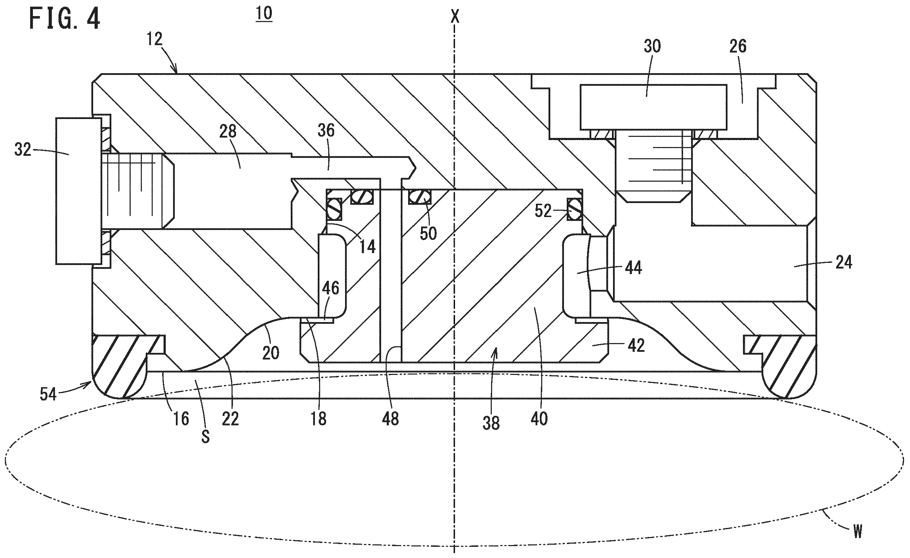

Next, an operation of the lift device 10 suctioning and holding a workpiece W will be described. The lift device 10 is attached, for example, to an arm of a transport device. The workpiece W is placed at a predetermined place such as a floor surface. Here, it is assumed that the workpiece W has a curved shape bulging upward (see FIG. 4).

The transport device is driven, and the lift device 10 approaches the workpiece W from above the workpiece W. At the same time, air from the air supply source is supplied to the first port 24 of the lift device 10. The air supplied to the first port 24 passes through the annular groove 44 and the nozzle grooves 46 of the deflector 38 and then flows along the first curved surface 20, the second curved surface 22 and the first flat surface 16 of the body 12. The air flowing along the first flat surface 16 flows along the annular protruding portion 58 of the elastic body 54 due to the Coanda effect.

When the distance between the lift device 10 and the workpiece W is within a predetermined range, the flow velocity of the air becomes extremely high. Therefore, due to the Bernoulli effect, a negative pressure is generated in the space S on the inner peripheral side of the annular protruding portion 58 of the elastic body 54, and the workpiece W is thereby lifted and suctioned by the lift device 10. The lifted work W comes into contact with the annular protruding portion 58 of the elastic body 54 by its momentum and then separated from the elastic body 54 by reaction. Thereafter, the workpiece W is again suctioned to the lift device 10 by action of the negative pressure existing in the space S on the inner peripheral side of the annular protruding portion 58 of the elastic body 54.

If the workpiece W comes into contact with the entire circumference of the elastic body 54, the flow of air is blocked, whereby the Bernoulli effect disappears, and as a result, the suction holding force of the workpiece W becomes 0. Therefore, the work W eventually becomes in a state in which a minute gap corresponding to the weight of the workpiece W is formed between the workpiece W and the annular protruding portion 58 of the elastic body 54, and is suctioned and held by the lift device 10. At this time, as shown in FIG. 4, part of the workpiece W enters the space S on the inner peripheral side of the annular protruding portion 58 of the elastic body 54. Thereafter, the transport device is driven, and the workpiece W is transported to a predetermined place while being held in a stable posture. In the above, it is assumed that the workpiece W having a curved shape is suctioned and held, but the workpiece W having a non-curved shape can also be suctioned and held in the same manner.

According to the lift device 10, the following operations and effects are achieved. First, since air flowing along the annular protruding portion 58 of the elastic body 54 is discharged upward or obliquely upward to the outside by the Coanda effect, there is no possibility of blowing off other workpieces W placed on a floor surface or the like. Second, even if the workpiece W collides with the elastic body 54 at the time of lifting the workpiece W, the collision sound is suppressed to be small by action of the elastic force of the elastic body 54, and no scratch or scar is left on the workpiece W.

Thirdly, since the annular protruding portion 58 of the elastic body 54 protrudes downward beyond the first flat surface 16 of the body 12, a large negative pressure space is present on the inner peripheral side of the elastic body 54, and the workpiece W having a curved shape bulging upward can also be suctioned and held. Fourthly, since the workpiece W comes into contact with the elastic body 54 only at the time of lifting and does not come into contact with the elastic body 54 in a state of being suctioned and held, it is possible to reduce occurrence of suction scratches due to contact with the elastic body 54 as much as possible. Fifth, when the workpiece W has a thin plate shape, vibration of the workpiece W caused by the discharge of air is suppressed by action of the elastic body 54.

### (Second Embodiment)

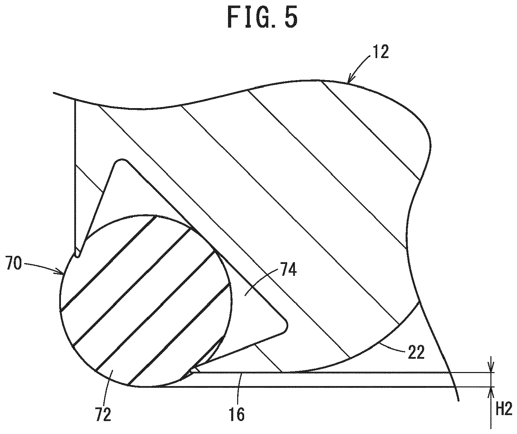

Next, a lift device according to a second embodiment of the present invention will be described with reference to FIG. 5. The lift device according to the second embodiment is different from the lift device 10 according to the first embodiment in the shape of an elastic body (elastic member) 70 and the configuration for attaching the elastic body 70. Hereinafter, matters relating to this difference will be mainly described. In the following description, when the same reference numerals as those in the first embodiment are used for members or the like, it means that the members and the like are equivalent to the members and the like in the first embodiment. The same applies to third to eight embodiments of the present invention, which will be discussed later.

The annular elastic body 70 is disposed on the outer periphery of the first flat surface 16 of the body 12 and is attached to the outer periphery of the lower end of the body 12. The elastic body 70 has a circular cross section and is made of an elastomer such as rubber or polyurethane resin. The outer periphery of the lower end of the body 12 is provided with an annular attachment groove 74 whose width gradually decreases toward an inlet of the groove. When the elastic body 70 is pushed into the attachment groove 74 of the body 12 while being deformed, the elastic body 70 is held in the attachment groove 74 by its restoring force. Thus, the elastic body 70 is attached to the body 12.

The elastic body 70 protrudes downward by a predetermined height H2 from the first flat surface 16 of the body 12 over the entire circumference thereof. In other words, the elastic body 70 includes an annular protruding portion 72 that protrudes downward beyond the first flat surface 16 of the body 12. The annular protruding portion 72 has a circular-arc-shaped cross section. Air jetted radially from the nozzle grooves 46 of the deflector 38 flows along the first curved surface 20, the second curved surface 22, and the first flat surface 16 of the body 12. The air flowing along the first flat surface 16 flows along the surface shape of the annular protruding portion 72 of the elastic body 70 due to the Coanda effect, and is discharged to the outside.

According to the lift device of the second embodiment, since the elastic body 70 having a circular cross section is used, it is easy to manufacture or obtain the elastic body 70.

### (Third Embodiment)

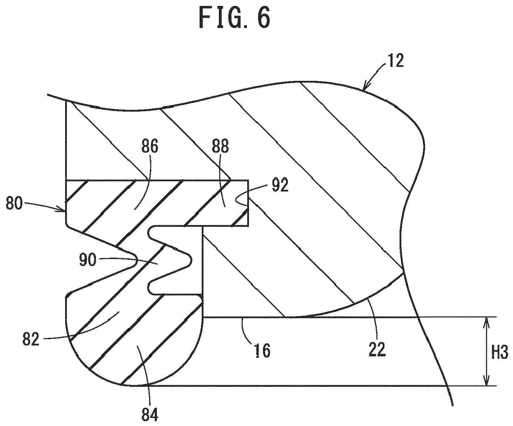

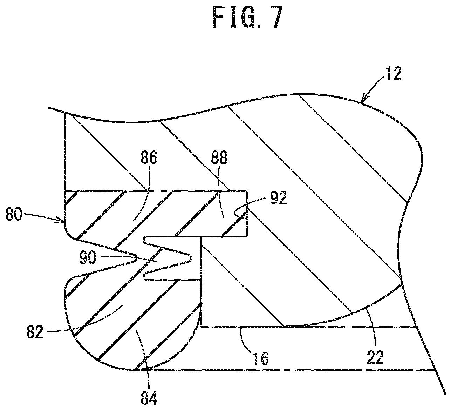

Next, a lift device according to a third embodiment of the present invention will be described with reference to FIGS. 6 and 7. The lift device according to the third embodiment differs from the lift device 10 according to the first embodiment in the configuration of an elastic body (elastic member) 80. Hereinafter, matters relating to this difference will be mainly described.

The annular elastic body 80 is disposed on the outer periphery of the first flat surface 16 of the body 12 and is attached to the outer periphery of the lower end of the body 12. The elastic body 80 is made of an elastomer such as rubber or polyurethane resin. The elastic body 80 includes a main body portion 82 facing the workpiece, a fixation portion 86 attached to the body 12, and a bellows-shaped connection portion 90 connecting the main body portion 82 to the fixation portion 86.

The fixation portion 86 of the elastic body 80 is provided with an annular projection 88 that projects radially inward. The elastic body 80 is attached to the body 12 by fitting the projection 88 of the fixation portion 86 into an annular attachment groove 92 provided on the outer periphery of the lower end of the body 12. The connection portion 90 of the elastic body 80 is bendable and allows the main body portion 82 to be displaced in the up-down direction. FIG. 7 shows a state in which the main body portion 82 is displaced upward.

The main body portion 82 of the elastic body 80 includes an annular protruding portion 84 that protrudes downward beyond the first flat surface 16 of the body 12. The annular protruding portion 84 has a semicircular (circular-arc-shaped) cross section. As shown in FIG. 6, when no vertical force (i.e., in the up-down direction) is applied to the connection portion 90, the annular protruding portion 84 protrudes downward by a predetermined height H3 from the first flat surface 16 of the body 12 over the entire circumference of the elastic body 80. Air jetted radially from the nozzle grooves 46 of the deflector 38 flows along the first curved surface 20, the second curved surface 22, and the first flat surface 16 of the body 12. The air flowing along the first flat surface 16 flows along the surface shape of the annular protruding portion 84 of the elastic body 80 due to the Coanda effect, and is discharged to the outside.

According to the lift device of the third embodiment, since the elastic body 80 is provided with the bellows-shaped connection portion 90, the collision sound when the workpiece collides with the elastic body 80 can be further suppressed, and it is possible to reliably prevent a scratch or scar from being left on the workpiece.

### (Fourth Embodiment)

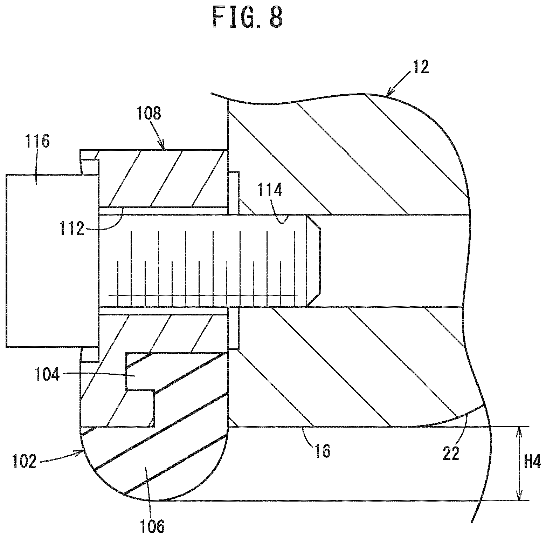

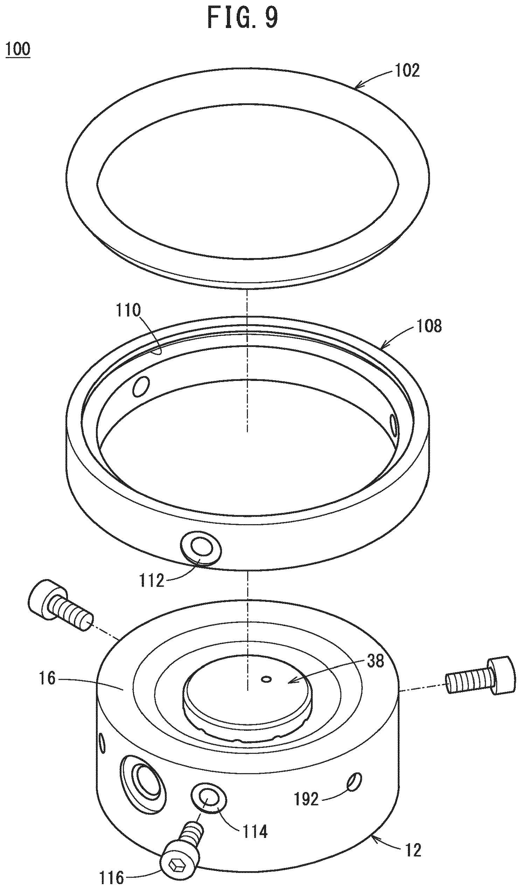

Next, a lift device 100 according to a fourth embodiment of the present invention will be described with reference to FIGS. 8 and 9. The lift device 100 is different from the lift device 10 according to the first embodiment in the configuration for attaching an elastic body (elastic member) 102. Hereinafter, matters relating to this difference will be mainly described.

The lift device 100 includes a cylindrical holder 108 for holding an elastic body 102. The annular elastic body 102 is disposed on the outer periphery of the first flat surface 16 of the body 12, and is attached to the body 12 via the holder 108. The elastic body 102 is made of an elastomer such as rubber or polyurethane resin. An upper portion of the elastic body 102 includes an annular projection 104 projecting outward in the radial direction. The elastic body 102 is attached to the holder 108 by fitting the projection 104 of the elastic body 102 into an annular attachment groove 110 provided on the inner periphery of the lower end of the holder 108.

The holder 108 has a plurality of bolt insertion holes 112 penetrating therethrough in the radial direction. The outer peripheral portion of the body 12 has screw holes 114 at positions corresponding to the respective bolt insertion holes 112 of the holder 108. Bolts 116 inserted through the bolt insertion holes 112 of the holder 108 are screw-engaged into the screw holes 114 of the body 12, whereby the holder 108 is attached to the body 12.

A lower portion of the elastic body 102 includes an annular protruding portion 106 that protrudes downward beyond the first flat surface 16 of the body 12. The annular protruding portion 106 has a semi-circular (circular-arc-shaped) cross section, and protrudes downward by a predetermined height H4 from the first flat surface 16 of the body 12 over the entire circumference of the elastic body 102. Air jetted radially from the nozzle grooves 46 of the deflector 38 flows along the first curved surface 20, the second curved surface 22, and the first flat surface 16 of the body 12. The air flowing along the first flat surface 16 flows along the surface shape of the annular protruding portion 106 of the elastic body 102 due to the Coanda effect, and is discharged to the outside.

According to the lift device 100, since the elastic body 102 is attached to the body 12 via the holder 108, it is possible to attach the elastic body 102 easily. Note that reference numeral 192 denotes an engagement hole used in the seventh embodiment as will be described later. The body 12 having the screw holes 114 and the engagement holes 192 can be commonly used in the fifth to eighth embodiments.

### (Fifth Embodiment)

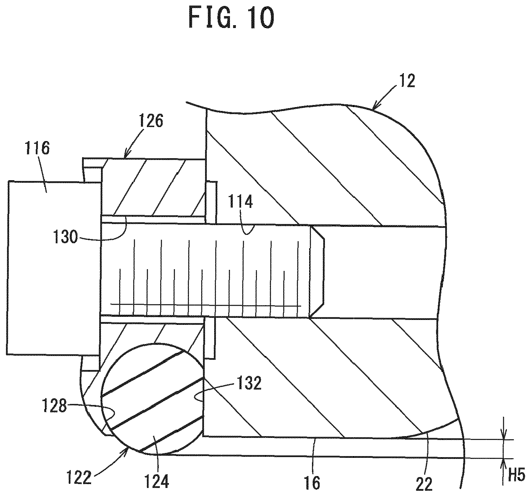

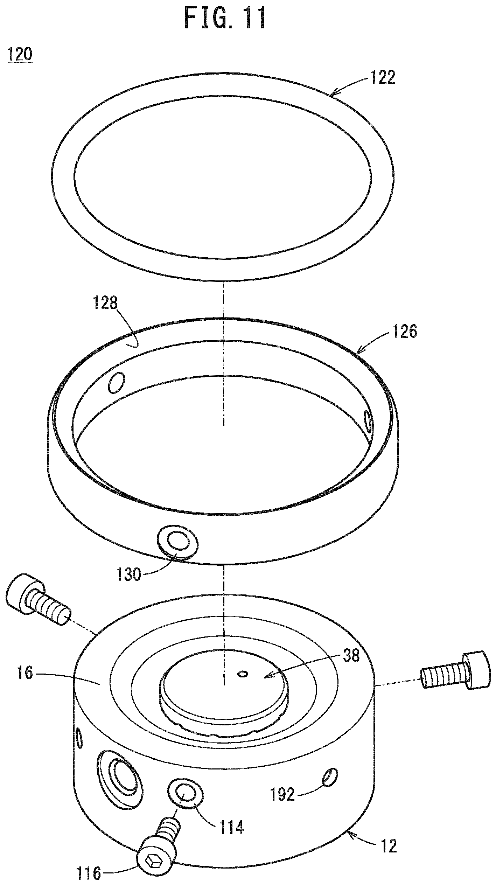

Next, a lift device 120 according to a fifth embodiment of the present invention will be described with reference to FIGS. 10 and 11. The lift device 120 is different from the lift device 10 according to the first embodiment in the shape of an elastic body (elastic member) 122 and the configuration for attaching the elastic body 122. Hereinafter, matters relating to this difference will be mainly described.

The lift device 120 includes a cylindrical holder 126 that holds the elastic body 122. The annular elastic body 122 is disposed on the outer periphery of the first flat surface 16 of the body 12, and is attached to the body 12 via the holder 126. The elastic body 122 has a circular cross section and is made of an elastomer such as rubber or polyurethane resin. The holder 126 includes an attachment groove 128 having a semi-circular cross section. The elastic body 122 is attached to the body 12 by being sandwiched between the inner surface of the attachment groove 128 and a side surface 132 of the body 12.

The holder 126 has a plurality of bolt insertion holes 130 penetrating therethrough in the radial direction. The outer peripheral portion of the body 12 has the screw holes 114 at positions corresponding to the respective bolt insertion holes 130 of the holder 126. Bolts 116 inserted through the bolt insertion holes 130 of the holder 126 are screw-engaged into the screw holes 114 of the body 12, whereby the holder 126 is attached to the body 12.

The elastic body 122 protrudes downward by a predetermined height H5 from the first flat surface 16 of the body 12 over the entire circumference thereof. In other words, the elastic body 122 includes an annular protruding portion 124 that protrudes downward beyond the first flat surface 16 of the body 12. The annular protruding portion 124 has a circular-arc-shaped cross section. Air jetted radially from the nozzle grooves 46 of the deflector 38 flows along the first curved surface 20, the second curved surface 22, and the first flat surface 16 of the body 12. The air flowing along the first flat surface 16 flows along the surface shape of the annular protruding portion 124 of the elastic body 122 due to the Coanda effect, and is discharged to the outside.

According to the lift device 120, since the elastic body 122 is attached to the body 12 using the holder 126, it is possible to attach the elastic body 122 easily. In addition, since the elastic body 122 having a circular cross section is used, it is easy to manufacture or obtain the elastic body 122.

### (Sixth Embodiment)

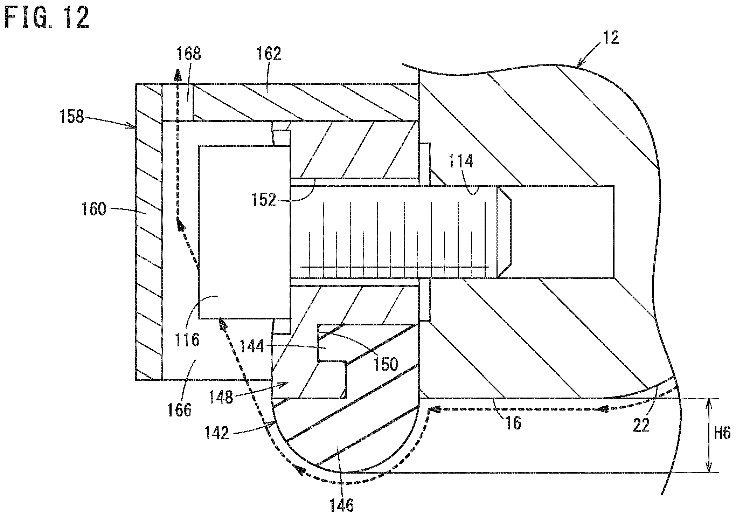

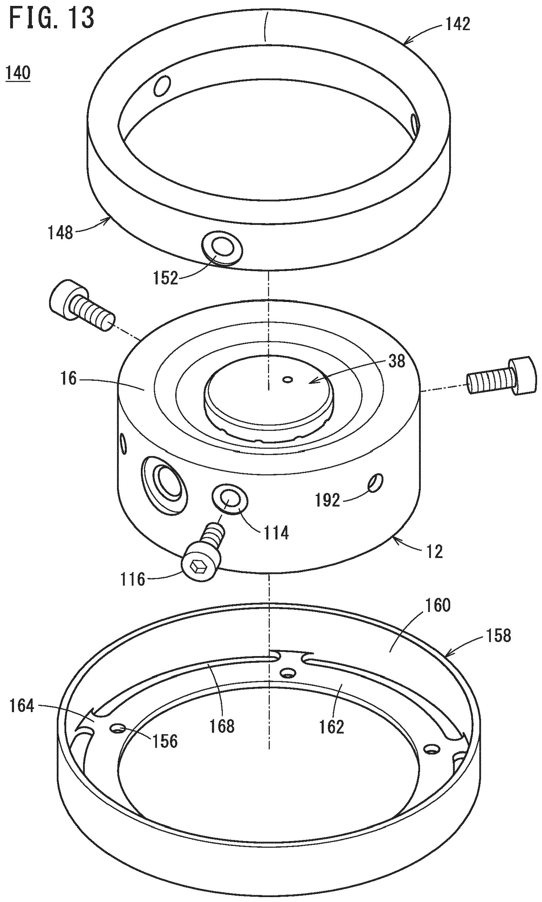

Next, a lift device 140 according to a sixth embodiment of the present invention will be described with reference to FIGS. 12 and 13. The lift device 140 is different from the lift device 10 according to the first embodiment in the configuration for attaching an elastic body (elastic member) 142. Further, the lift device 140 is different from the lift device 10 in the configuration for guiding the discharged air. Hereinafter, matters relating to these differences will be mainly described.

The lift device 140 includes a cylindrical holder 148 that holds the elastic body 142. The annular elastic body 142 is disposed on the outer periphery of the first flat surface 16 of the body 12, and is attached to the body 12 via the holder 148. The elastic body 142 is made of an elastomer such as rubber or polyurethane resin. An upper portion of the elastic body 142 includes an annular projection 144 projecting outward in the radial direction. The elastic body 142 is attached to the holder 148 by fitting the projection 144 of the elastic body 142 into an annular attachment groove 150 provided on the inner periphery of the lower end of the holder 148.

The holder 148 has a plurality of bolt insertion holes 152 penetrating therethrough in the radial direction. The outer peripheral portion of the body 12 has the screw holes 114 at positions corresponding to the respective bolt insertion holes 152 of the holder 148. Bolts 116 inserted through the bolt insertion holes 152 of the holder 148 are screw-engaged into the screw holes 114 of the body 12, whereby the holder 148 is attached to the body 12.

Further, the lift device 140 includes a tubular cover body 158 that guides the discharged air to the upper side of the lift device 140. The cover body 158 includes a thin-walled cylindrical portion 160 and a thin-walled disk portion 162. The disk portion 162 is connected to an upper end of the cylindrical portion 160 via a plurality of connection pieces 164 extending from an outer periphery of the disk portion. A first gap 166 serving as an air flow path is formed between the outer peripheral surface of the holder 148 and the inner peripheral surface of the cylindrical portion 160. A second gap 168 serving as an air flow path is formed between the adjacent connection pieces 164. The cover body 158 is attached to the holder 148 using bolts (not shown). Reference numeral 156 denotes a hole through which the bolt is inserted.

A lower portion of the elastic body 142 includes an annular protruding portion 146 that protrudes downward beyond the first flat surface 16 of the body 12. The annular protruding portion 146 has a semi-circular (circular-arc-shaped) cross section, and protrudes downward by a predetermined height H6 from the first flat surface 16 of the body 12 over the entire circumference of the elastic body 142. Air jetted radially from the nozzle grooves 46 of the deflector 38 flows along the first curved surface 20, the second curved surface 22, and the first flat surface 16 of the body 12. The air flowing along the first flat surface 16 flows along the surface shape of the annular protruding portion 146 of the elastic body 142 due to the Coanda effect.

The air that has flowed along the annular protruding portion 146 of the elastic body 142 flows upward or obliquely upward due to the Coanda effect, and the air is thereafter guided to the first gap 166 between the outer peripheral surface of the holder 148 and the inner peripheral surface of the cylindrical portion 160, and is discharged to the outside through the second gaps 168 between the adjacent connection pieces 164. In FIG. 12, the flow of air is indicated by dashed arrows. An exhaust pipe (not shown) can be connected to an outlet of the second gap 168.

According to the lift device 140, since the elastic body 142 is attached to the body 12 via the holder 148, it is possible to attach the elastic body 142 easily. Further, since the cover body 158 for guiding the discharged air to the upper side of the lift device 140 is provided, the air can be collected into one place and discharged.

### (Seventh Embodiment)

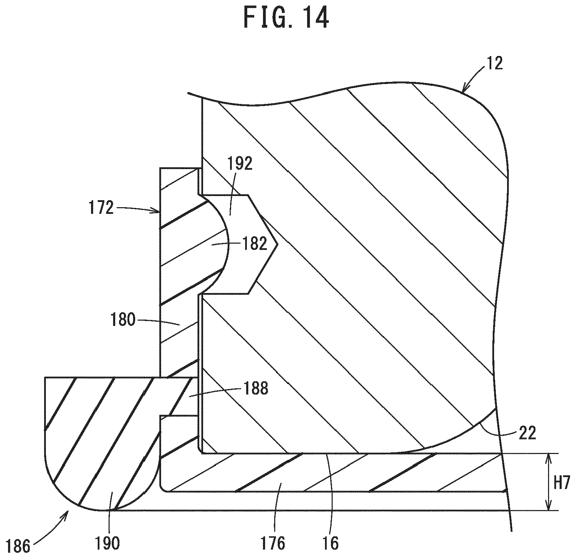

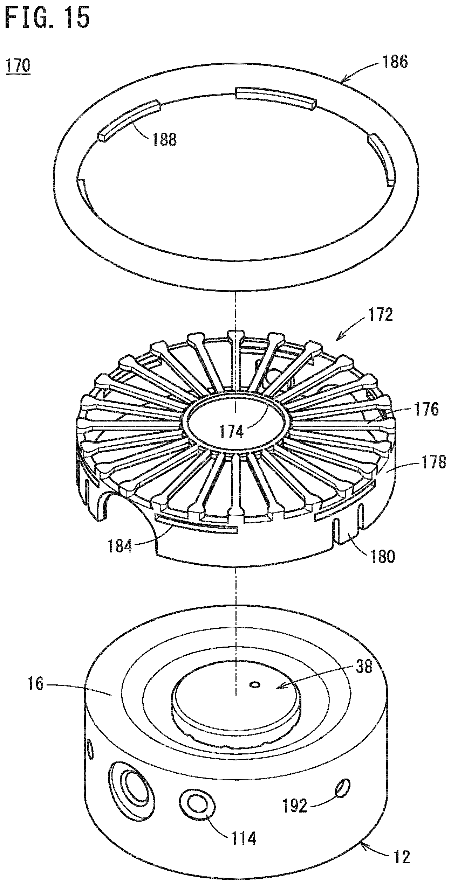

Next, a lift device 170 according to a seventh embodiment of the present invention will be described with reference to FIGS. 14 and 15. The lift device 170 is different from the lift device 10 according to the first embodiment in that an attachment member 172 suitable for suctioning a sheet-shaped workpiece having flexibility is provided. Further, the lift device 170 is different from the lift device 10 in the configuration for attaching an elastic body (elastic member) 186. Hereinafter, matters relating to these differences will be mainly described.

The attachment member 172 includes an annular ring 174 facing the lower surface of the deflector 38, a plurality of bridge portions 176 extending radially from the outer periphery of the ring 174, and a cylindrical cover wall 178 connected to the outer ends of the plurality of bridge portions 176. The plurality of bridge portions 176 are arranged at equal angular intervals in the circumferential direction. When, for example, a sheet-shaped workpiece having flexibility is suctioned, entering of the workpiece into the body 12 is suppressed by the plurality of bridge portions 176, and vibration or rattling of the workpiece is prevented.

The cover wall 178 of the attachment member 172 includes a plurality of claw portions 180 formed by cutting out part of the cover wall in the up-down direction. Each of the claw portions 180 has elasticity and is provided with a convex portion 182 that protrudes radially inward at a distal end thereof. The outer peripheral portion of the body 12 has engagement holes 192 at positions corresponding to the respective convex portions 182 of the claw portions 180. The attachment member 172 is attached to the body 12 by engaging the convex portions 182 of the claw portions 180 with the engagement holes 192 of the body 12. The bridge portions 176 of the attachment member 172 abut against the first flat surface 16 of the body 12, but the flow of air along the first flat surface 16 is not obstructed by the bridge portions 176.

The annular elastic body 186 is disposed on the outer periphery of the first flat surface 16 of the body 12 and is attached to the body 12 via the attachment member 172. The elastic body 186 is made of an elastomer such as rubber or polyurethane resin. An upper portion of the elastic body 186 is provided with a plurality of elongated projections 188 projecting radially inward. The cover wall 178 of the attachment member 172 has elongated engagement holes 184 at positions corresponding to the respective projections 188 of the elastic body 186. The elastic body 186 is attached to the attachment member 172 by engaging the projections 188 of the elastic body 186 into the engagement holes 184 of the cover wall 178.

A lower portion of the elastic body 186 includes an annular protruding portion 190 that protrudes downward beyond the first flat surface 16 of the body 12. The annular protruding portion 190 has a semi-circular (circular-arc-shaped) cross section, and protrudes downward by a predetermined height H7 from the first flat surface 16 of the body 12 over the entire circumference of the elastic body 186. Air jetted radially from the nozzle grooves 46 of the deflector 38 flows along the first curved surface 20, the second curved surface 22, and the first flat surface 16 of the body 12. The air flowing along the first flat surface 16 flows along the surface shape of the annular protruding portion 190 of the elastic body 186 due to the Coanda effect, and is discharged to the outside.

According to the lift device 170, since the attachment member 172 including the bridge portions 176 is attached, it is possible to prevent vibration of the workpiece having flexibility. In addition, since the elastic body 186 is attached using the attachment member 172, it is possible to attach the elastic body 186 easily.

### (Eighth Embodiment)

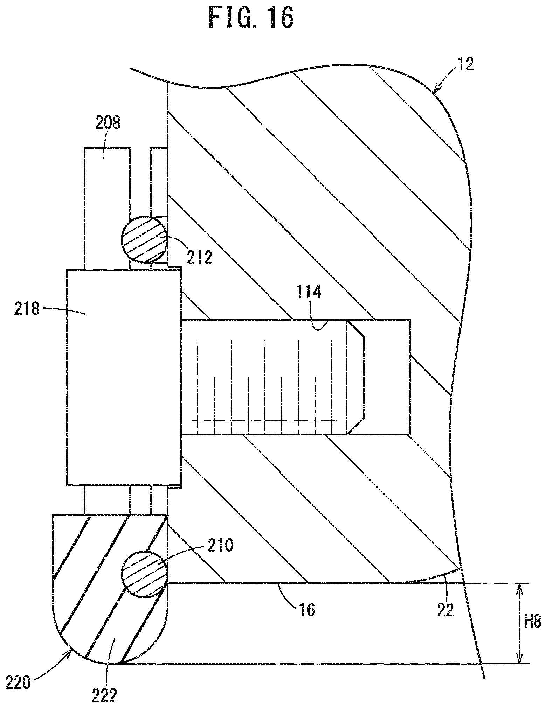

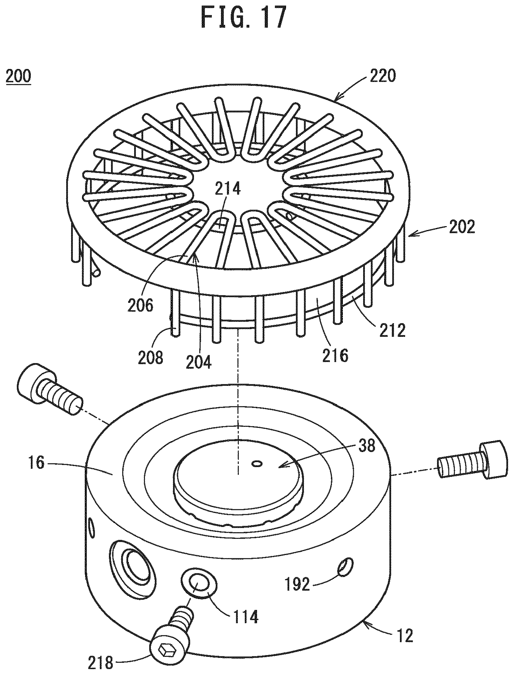

Next, a lift device 200 according to an eighth embodiment of the present invention will be described with reference to FIGS. 16 and 17. The lift device 200 is different from the lift device 10 according to the first embodiment in that an attachment member 202 suitable for suctioning a sheet-shaped workpiece having flexibility is provided. Further, the lift device 200 is different from the lift device 10 in the configuration for attaching an elastic body (elastic member) 220. Hereinafter, matters relating to these differences will be mainly described.

The attachment member 202 includes a plurality of spokes 204, a first outer ring 210, a second outer ring 212, and an inner ring 214. Each of the spokes 204 includes a V-shaped portion 206 extending in the radial direction, and vertical portions 208 vertically bent from both ends of the V-shaped portion 206. The plurality of spokes 204 are arranged at equal intervals in the circumferential direction. The first outer ring 210 is connected to a bent portion of each spoke 204. The second outer ring 212 is connected to a vertical portion 208 of each spoke 204. The inner ring 214 is connected to a near-tip portion of the V-shaped portion 206 of each spoke 204. When, for example, a sheet-shaped workpiece having flexibility is suctioned, entering of the workpiece into the body 12 is suppressed by the V-shaped portions 206 of the spokes 204, and vibration or rattling of the workpiece is prevented.

The vertical portions 208 of the plurality of spokes 204, the first outer ring 210, and the second outer ring 212 form lattice-shaped openings 216 arranged in the circumferential direction. A plurality of bolts 218 each having a head large enough to fit into the opening 216 without rattling are inserted into the predetermined openings 216 and screw-engaged into screw holes 114 provided in the body 12. Thus, the attachment member 202 is attached to the body 12. The V-shaped portions 206 of the spokes 204 of the attachment member 202 abut against the first flat surface 16 of the body 12, but the flow of air along the first flat surface 16 is not obstructed by the spokes 204.

The annular elastic body 220 is disposed on the outer periphery of the first flat surface 16 of the body 12. The elastic body 220 is made of an elastomer such as rubber or polyurethane resin. The elastic body 220 is formed by insert-molding, so as to be in close contact with the first outer ring 210 of the attachment member 202. That is, the elastic body 220 is integrally molded with the attachment member 202.

A lower portion of the elastic body 220 includes an annular protruding portion 222 that protrudes downward beyond the first flat surface 16 of the body 12. The annular protruding portion 222 has a semi-circular (circular-arc-shaped) cross section, and protrudes downward by a predetermined height H8 from the first flat surface 16 of the body 12 over the entire circumference of the elastic body 220. Air jetted radially from the nozzle grooves 46 of the deflector 38 flows along the first curved surface 20, the second curved surface 22, and the first flat surface 16 of the body 12. The air flowing along the first flat surface 16 flows along the surface shape of the annular protruding portion 222 of the elastic body 220 due to the Coanda effect, and is discharged to the outside.

According to the lift device 200, since the attachment member 202 including the spokes 204 is attached, it is possible to prevent vibration of the workpiece having flexibility. In addition, since the elastic body 220 is integrally molded with the attachment member 202 by insert molding, a process of attaching the elastic body 220 is not necessary.

The lift device according to the present invention is not limited to the embodiments described above, and various configurations may be adopted therein without deviating from the essence and gist of the present invention. For example, in the sixth embodiment, the holder 148 and the cover body 158 are provided, and the cover body 158 is attached to the holder 148. However, an embodiment containing a cover body without a holder is also conceivable. In this case, the cover body is attached to the body.

## Claims

1. A lift device (10, 100, 120, 140, 170, 200) comprising: a body (12) having a cylindrical shape; and an elastic member (54, 70, 80, 102, 122, 142, 186, 220) having an annular shape,
wherein the body includes, at an axial end thereof, a flat surface (16) configured to hold a workpiece,
the elastic member is disposed on an outer periphery of the flat surface of the body, and includes an annular protruding portion (58, 72, 84, 106, 124, 146, 190, 222) that protrudes beyond the flat surface of the body in an axial direction of the body, the annular protruding portion having a circular-arc-shaped cross section, and
air supplied to the body flows along the flat surface of the body and the annular protruding portion of the elastic member.

2. The lift device according to claim 1, wherein
the elastic member includes an annular projection (56, 88, 104, 144) projecting radially inward, and the annular projection is fitted into an annular attachment groove (34, 92, 110, 150) provided in the body.

3. The lift device according to claim 1, wherein
the elastic member has a circular cross section, the body includes an annular attachment groove (74) whose width gradually decreases toward an inlet of the annular attachment groove, and the elastic member is held in the annular attachment groove.

4. The lift device according to claim 1, wherein
the elastic member comprises: a main body portion (82) provided with the annular protruding portion (84); a fixation portion (86) attached to the body; and a bellows-shaped connection portion (90) that connects the main body portion to the fixation portion.

5. The lift device according to claim 1, further comprising a holder (108, 126, 148) configured to hold the elastic member, wherein the holder is attached to the body.

6. The lift device according to claim 5, wherein
the elastic member includes an annular projection (104) projecting radially outward, and the annular projection is fitted into an annular attachment groove (110) provided in the holder.

7. The lift device according to claim 5, wherein
the elastic member has a circular cross section, the holder includes an attachment groove (128) having a semicircular cross section, and the elastic member is sandwiched between an inner surface of the attachment groove and a side surface of the body.

8. The lift device according to claim 1, further comprising a tubular cover body (158) configured to guide discharged air.

9. The lift device according to claim 1, further comprising an attachment member (172), wherein the attachment member comprises: a ring (174) having an annular shape; a plurality of bridge portions (176) extending radially from an outer periphery of the ring; and a cylindrical cover wall (178) connected to outer ends of the bridge portions.

10. The lift device according to claim 9, wherein
the elastic member is attached to the attachment member.

11. The lift device according to claim 10, wherein
the elastic member includes a plurality of projections (188) projecting radially inward, and the projections are engaged into engagement holes (184) of the cylindrical cover wall.

12. The lift device according to claim 1, further comprising an attachment member (202) that includes a plurality of spokes (204) and an outer ring (210).

13. The lift device according to claim 12, wherein
the elastic member is formed by insert-molding so as to be in close contact with the outer ring.
